# EUROPEAN PATENT SPECIFICATION

(11) **EP 2 462 387 B1**
(45) Date of publication and mention of the grant of the patent: **14.11.2012**
(21) Application number: 09764460.3
(22) Date of filing: 02.12.2009
(51) Int. Cl.: F24J 2/52, F24J 2/46

(54) **MOUNTING SYSTEM FOR SOLAR PANELS**
MONTAGESYSTEM FÜR SONNENKOLLEKTOREN
SYSTÈME DE MONTAGE POUR PANNEAUX SOLAIRES

(43) Date of publication of application: 13.06.2012
(73) Proprietor: Renusol GmbH, 51063 Köln (DE)
(72) Inventor: KÜBSCH, Michael, 16321 Bernau bei Berlin (DE); ZSCHOCH, Stefan, 10367 Berlin (DE); WENZLAFF, Jan, 10247 Berlin (DE); RADISCHAT, Uwe, 12555 Berlin (DE)
(74) Representative: Graf von Stosch, Andreas
(86) International application number: PCT/EP2009/008593
(87) International publication number: WO 2011/066843

(56) References cited:
- EP-A1- 0 417 303
- DE-A1- 10 017 125
- DE-A1-102005 039 495
- DE-U1-202009 000 030
- DE-U1-202009 007 326
- JP-A- 2006 210 613

## Description

### Technical Field

The present invention relates to a mounting system for mounting solar panel.

The mounting system of the invention is particularly suitable for use in mounting solar panels on a rooftop, such as a pitched rooftop, or similar structure, and it will convenient to describe the invention in this exemplary context. It is to be appreciated, however, that the mounting system of the invention is not limited to use on rooftops or sloping surfaces, but may also be employed where the solar panels are to be mounted on any of a variety of supporting frameworks.

### Background of the Invention

As a result of the increasing trend towards adoption of renewable energy sources, the installation of solar panel arrays is gaining in popularity, not only for industrial and institutional applications, but also in the domestic and rural environments. Whether for the industrial, institutional, domestic or rural environment, the solar panels are often mounted on the rooftops of buildings - most typically in the area where the solar energy is required. Roof structures are particularly convenient for this purpose as they present a large surface area directed towards the sun, which is both out of the way and often largely out of view from the normal visual perspective, thereby rendering the installations relatively unobtrusive. Horizontal or flat rooftop surfaces are naturally convenient for workers assembling and installing an array of solar panels as they provide an even and stable working environment. Many roof structures, however, are not horizontal but rather are pitched or angled, and thereby present significant challenges for the workers installing the solar panel array.

When installing solar panel arrays on a rooftop, particularly on a pitched or angled rooftop, it is often desirable and necessary to remove a portion of the original roof cladding, such as tiles or sheet material, in the area of the roof at which the solar panels are to be arranged. This is often necessary to gain access to the structural framework of the roof (i.e. the arrangement of beams and bearing members such as rafters, battens, purlins and/or stringers), upon which the array of solar panels is ultimately to be supported and secured. Removal of the original cladding material in this area also enables the solar panel array to be set into the roof, thereby giving the array a significantly lower profile and making it less conspicuous than if it were simply mounted on top of the original outer roof cladding. When the original roof cladding is replaced with the solar panel array, however, it is naturally critical to ensure that the integrity of the weather-proofing is retained in the rooftop after installation of the array.

The solar panels typically comprise photovoltaic modules and the newer versions being increasingly produced by manufacturers comprise relatively thin, glass-layered modules which dispense with a metal frame around the panel edges. Although they may not offer the maximum possible solar efficiency, the frameless glass-layered photovoltaic panels are nevertheless gaining in popularity because they still provide acceptable performance at a substantially lower cost than modules with the highest possible solar efficiency. The individual frameless, glass-layered photovoltaic solar panels may have various dimensions, but typically exhibit a solar collecting area in the range of about 0.5 m² to about 4 m². One particular example of such a panel has dimensions of about 1.3 m x 1.1 m and a mass of about 25 kg. Thus, in addition to the fact that the frameless glass panels are difficult to mount reliably without causing damage at the edge regions of the panels, the individual panels can be quite heavy and of an unwieldy size, presenting an area which, during handling, is susceptible to even light gusts of wind, making their handling by a single person installing the array difficult.

It is therefore apparent that the installation of such panels on a pitched or inclined roof surface can present major challenges for an efficient installation procedure. To address many of these issues, the applicant has previously developed an improved system for mounting solar panels described in the co-pending International Patent Application No. WO 2010 1120 49 A1.

Nevertheless, even in view of the advancements and benefits provided by the system described in the co-pending application referenced above, it remains an object to optimise the solar panel mounting system to provide a new and improved solar panel mounting system which enables a solar panel array to be integrated into a roof structure such that it forms part of the building envelope and, in a simple and cost-effective manner, substantially prevents ingress of rain-water into the roof structure after the panels are installed.

A mounting system according to the preamble part of claim 1 is disclosed in DE 10 2005 039 495 A1. Further, similar mounting systems are known from DE 20 2009 000 030 U1 and EP 0417 303 A1.

### Summary of the Invention

According to the present invention, a mounting system for mounting one or more solar panels comprises: a plurality of elongate mounting members adapted to be arranged and secured in longitudinal alignment with one another for supporting one or more solar panels thereon; and a plurality of anchoring devices for securing the mounting members to a support structure, such as a roof structure. Each of the mounting members comprises: an upper portion for receiving and supporting an edge region of a solar panel, and a base portion configured for connection with one or more of the anchoring devices along substantially an entire length of the mounting member. The base portion of the mounting member is longitudinally offset from and/or extends longitudinally beyond the upper portion, such that the base portion of one mounting member is configured to overlap with the base portion of a longitudinally adjacent or adjoining mounting member. The plurality of elongate mounting members are typically also adapted to be arranged and secured substantially parallel to and laterally spaced from one another, such that the elongate mounting members form a mounting frame for supporting an array of the solar panels thereon, with each solar panel extending between at least two laterally spaced mounting members.

In a preferred form of the invention the base portion includes at least one longitudinally extending channel which is upwardly open for capturing and/or directing water ingress under the solar panels. This at least one upwardly open channel of the base portion is desirably configured to overlap in the longitudinal direction with a respective upwardly open channel in the base portion of a longitudinally adjacent or adjoining mounting member. A panel seating area for receiving and fixing the edge region of a solar panel extends longitudinally on the upper portion of the mounting member, and the at least one upwardly open channel may project laterally, i.e. in its breadth, to a side of the mounting member beyond a lateral extent of the panel seating area.

In a preferred form of the invention, the base portion of each mounting member includes a longitudinally extending channel which opens downwardly for receiving a coupling member of one of the anchoring devices on an underside of the mounting member. Preferably, the at least one upwardly open channel in the base portion extends parallel to and laterally spaced from the downwardly open channel. In a particular embodiment, the base portion of each mounting member includes two parallel upwardly open channels arranged to extend parallel to and laterally spaced to either side of the downwardly open channel located centrally of the base portion. Each upwardly open channel preferably projects laterally, i.e. in its breadth, to a side of the mounting rail beyond a lateral extent of the panel seating area on the upper portion of the mounting member.

According to one aspect, not forming part of the present invention, a mounting system for mounting one or more solar panels on a support structure, such as a roof structure, comprises: a plurality of elongate mounting members adapted to be arranged and secured spaced apart and substantially parallel to one another, each of the mounting members being adapted to receive and support an edge region of a solar panel such that each solar panel extends between at least two of the mounting members; and a plurality of anchoring devices for securing each of the mounting members to the support structure, with each of the anchoring devices comprising a footing to be rigidly fastened to the support structure and a coupling member for connection with a respective one of the mounting members. According to this aspect, a spacing between the coupling member and the footing is selectively variable by a user to adjust and/or set an elevation or height of the respective mounting member relative to the support structure. In this way, when installing a solar panel array on a roof structure, the mounting system is able to be readily adapted by the operator to suit the particular roof structure concerned, including the positions and sizes of the roof beams. This is particularly convenient for adjusting and setting the disposition of the solar panels to overlap at their respective upper and lower edge regions, e.g. on a pitched or inclined roof structure, so that the solar panels can be arranged to function as part of the building envelope and effectively replace the original roof cladding material. In other words, the solar panels themselves can be arranged to guide rain-water and/or snow melt over the roof area without permitting any significant ingress into the roof space.

In a preferred form of this aspect, the footing of each anchoring device is designed to provide a stable foundation upon which a frame of the mounting system, i.e. comprising the plurality of mounting members, may stand. In this regard, each footing may comprise a plate member for rigid attachment to the support structure via one or more fasteners (e.g. screw fasteners). Thus, a substantially flat or planar surface of the plate member may be configured to seat stably against a substantially flat surface of the support structure and to be rigidly fastened thereto.

In a particular form of this aspect, the coupling member of each anchoring device is connected in spaced relationship to the footing via a spacer member. In such an embodiment, the spacer member and/or the coupling member preferably include(s) means for selectively varying (and desirably setting or fixing) the position of the coupling member on the spacer member. As such, the coupling member may be mounted on the spacer member and selectively movable relative thereto. That is, the position varying means may include means for moving the coupling member on the spacer member. The footing, on the other hand, may be rigidly fixed to the spacer member. Despite the possibility of relative movement, the connection between the coupling member and the spacer member is nevertheless typically stable, secure and robust. By varying the position of the coupling member on the spacer member, the spacing between the coupling member and the footing can thereby be selectively varied and/or set by a user to adjust an elevation of the mounting member relative to the support structure. In this way, the position varying means essentially forms means for adjusting the spacing.

In a preferred form of this aspect, the position varying means (i.e. the adjusting means) is configured for varying the spacing continuously between a predetermined maximum and a predetermined minimum, i.e. between two end positions. In this regard, the position varying means (i.e. adjusting means) may incorporate a screw-thread for effecting a gradual continuous displacement along the thread between the end positions. For example, the spacer member may comprise a threaded rod and the coupling member may be in threaded engagement with the spacer rod, such that rotating the threaded rod relative to the coupling member moves the coupling member axially along the rod, either towards or away from the footing, thereby varying or adjusting the distance or spacing between them. It will be appreciated, of course, that the skilled man's choice is not limited to the use of a screw-thread for the adjusting means. The position varying means (i.e. adjusting means) could also, for example, comprise a slidable mechanism, such as a clamp mechanism, for selectively and releasably clamping and fixing a position of the coupling member along a length of the spacer member. Such a clamp mechanism could be provided in the coupling member, which could be adapted for continuous sliding movement along the spacer member. Alternatively, the position varying means (adjusting means) may comprise a detent mechanism with a series of discrete locking positions for selectively adjusting and setting a desired position of the coupling member on the spacer member, and thus, the spacing between the footing and the coupling member.

In a preferred form of this aspect, the coupling member of each anchoring device is configured for selective connection with a respective mounting member along substantially the entire length of the mounting member; for example, via a snap-fit. In this way, the operator has maximum flexibility in selecting the position along the length of the mounting member at which the anchoring device is to be connected. This is quite important when one considers that the relative positions of the beams in a roof structure, over which the mounting members extend and to which they are to be secured, will vary from roof to roof. As it is often necessary to secure each of the elongate mounting members at three or more points along their length, the capability to connect the anchoring device at effectively any desired position along the length of the mounting members is particularly advantageous. Furthermore, having selected a desired position for the anchoring device along the length of the mounting member for a particular roof structure, the operator may then securely connect the anchoring device with the mounting member by a simple snap-fit or "click-in" operation.

In this respect, each of the mounting members desirably comprises a channel that extends longitudinally of the mounting member for receiving and securely engaging with the coupling member. The channel may be provided in a base portion of the mounting member and may open downwardly for receiving the coupling member from an underside of the mounting member. The downwardly open channel extends over substantially the entire length of the mounting member and the coupling member of the anchoring device is configured to engage and securely connect with the channel.

In a preferred form of the this aspect, the coupling member comprises at least one interconnection element for coupling engagement with at least one complementary interconnection element provided in the downwardly open channel of the mounting member. The at least one interconnection element of the coupling member may, for example, be in the form of a projection. In that case, the at least one complementary interconnection element in the channel may comprise a recess having a counterpart or corresponding geometry. Alternatively, of course, the at least one interconnection element of the coupling member may be in the form of a recess, and the at least one complementary interconnection element in the channel may be a corresponding projection. In a particular embodiment, such a combination of projection and recess may be in the form of complementary tongue and groove elements. These elements may also be provided with angled surfaces and/or with rounded or curved edges to facilitate sliding contact and engagement into a snap-fit interconnection therebetween.

In a preferred form of this aspect, the downwardly open channel in the base portion of the mounting member may be resiliently flexible or resiliently deformable to facilitate the desired snap-fit connection between the anchoring device and the mounting member. For example, when complementary interconnection elements are provided at opposite side walls of the channel to engage with the interconnection elements provided at opposite sides of the coupling member, the side walls of the channel may incorporate a degree of resilient flexibility or deformability to facilitate, for example, a resilient expansion and return contraction of the walls to effect or assist a "click-in" or snap-fit engagement of the respective elements. Alternatively or in addition, the elements themselves, e.g. the projection(s), may have resilience or spring means for assisting the snap-fit engagement.

After the coupling member of one of the anchoring devices is securely connected with the base of the mounting member, the operator can quickly and simply adjust and set the desired height or elevation of the mounting member at that particular position by varying the spacing between the footing and coupling member of the anchoring device, as described above. In one embodiment to be described in more detail later, this may be done by rotating the footing of the anchoring device relative to the coupling member connected to the mounting member. Once the elevation or height has been appropriately adjusted, the footing may then be rigidly fastened, e.g. with screws, to the roof structure.

According to another aspect, not forming part of the present invention, a mounting rail for mounting a solar panel in a solar panel mounting system has an upper portion with at least one panel seating area that extends longitudinally of the mounting rail for receiving and fixing an edge region of the solar panel; and a base portion having a longitudinally extending channel which opens downwardly to an underside of the mounting rail. The downwardly open channel is configured to receive a coupling member of an anchoring device for securing the mounting member to a support structure, such as a roof structure. The downwardly open channel includes at least one interconnection element for engagement with the coupling member of the anchoring device via a snap-fit. This snap-fit engagement is preferably releasable.

In a preferred form of this aspect, the downwardly open channel in the underside of the mounting rail includes interconnection elements formed in opposite side walls of the channel for engagement with complementary interconnection elements on opposite sides of the coupling member. As already noted above, the interconnection elements may be in the form of projections and/or recesses (e.g. tongue and groove elements) having counterpart or corresponding geometries. Furthermore, the side walls of the channel may have a degree of resilient flexibility or deformability to facilitate a "click-in" or snap-fit engagement of the respective elements. Thus, the interconnection elements in the downwardly open channel may be configured for resiliently flexible or resiliently biased engagement with the coupling member of the anchoring device.

In a preferred form of this aspect, the base portion of the mounting rail is elongate and desirably of uniform cross-section with a continuous central longitudinal axis. Similarly, the upper portion of the mounting rail is desirably elongate and of uniform cross-section with a continuous central longitudinal axis. The upper portion and the base portion of the mounting rail are typically rigidly connected with one another to provide an integral mounting rail construction. The upper portion and base portion may or may not be unitarily formed. Preferably, the base portion is longitudinally offset from and/or extends longitudinally beyond the upper portion of the mounting rail. In this way, the base portion of one mounting rail is configured to overlap with the base portion of a longitudinally adjacent or adjoining mounting rail in the solar panel mounting system. In a particularly preferred embodiment, the base portion of the mounting rail includes at least one longitudinally extending channel which is upwardly open for capturing and/or directing flow of water ingress under the solar panels. Thus, the at least one upwardly open channel of the base portion may be adapted to overlap in the longitudinal direction with another respective upwardly open channel in the base portion of a longitudinally adjacent or adjoining mounting member. Preferably, the at least one upwardly open channel in the base portion of the mounting rail extends parallel to and laterally spaced from the downwardly open channel, which itself desirably extends centrally of the base portion. The at least one upwardly open channel preferably projects laterally, i.e. in its breadth, to a side of the mounting rail beyond a lateral extent of the panel seating area on the upper portion of the mounting rail.

According to yet another aspect, not forming part of the present invention, an anchoring device for securing a mounting rail of a solar panel mounting system to a support structure comprises: a footing configured to be rigidly fastened to the support structure, and a coupling member for connection with the mounting rail. The anchoring device includes means for selectively varying a distance or spacing of the coupling member from the footing to adjust and/or set an elevation of the mounting member relative to the support structure.

In a preferred form of the anchoring device, the coupling member is connected to the footing via a spacer member, and the anchoring device includes means for selectively varying the position of the coupling member on the spacer member to adjust and/or set the elevation of the mounting member. As already discussed above, the spacer member and/or the coupling member may include the position varying means.

In a further aspect, not forming part of the present invention, refers to a retaining element for preventing the solar panel from sliding in a longitudinal or axial direction relative to an elongate mounting member of a mounting system for mounting solar panels on an inclined structure, such as a pitched roof. The retaining element comprises: a body portion configured to be securely fastened at an axial end of a first elongate mounting member, the body portion presenting a stop surface for engagement with a peripheral edge of a solar panel mounted on the first mounting member. The body portion includes positioning means configured to elevate the end region of the first mounting member relative to an end region of a second mounting member arranged adjacent or adjoining and in longitudinal alignment with the first mounting member.

In a preferred form of this furter aspect, the positioning means include one or more protrusion configured to seat upon, to overlap with, and/or to be received within the longitudinally adjacent or adjoining second mounting member. The body portion is preferably configured to engage a facing end surface of the first mounting member and may, for this purpose, comprise a facing plate member. The one or more protrusion of the positioning means may be provided on or project from the facing plate member.

It should be noted that the terms "upper", "lower", "above", "below", "topside", "underside", "lateral", "laterally" and other similar terms used herein in respect of various parts of the mounting system of the invention are intended to be given their ordinary meaning in view of the normal or in-use orientation of the mounting system described herein. It will be appreciated, however, that other interpretations of these terms may be appropriate depending on the particular orientation of the system and/or its respective parts at the time.

### Brief Description of the Drawings

The above and further features and advantages of the invention will become more readily apparent from the following detailed description of preferred embodiments of the invention with reference to the accompanying drawings, in which like reference characters identify like features, and in which:
Fig. 1 is a perspective view of a mounting system for solar panels according to a preferred embodiment of the invention shown assembled with the solar panels on part of a rooftop;
Fig. 2 is a detailed view of an end of a mounting member in the region marked "A" of the mounting system shown in Fig. 1
Fig. 3 is a detailed view of an end of a mounting member in the region marked "B" of the mounting system shown in Fig. 1;
Fig. 4 is a sectioned view of the mounting system and roof structure shown in Fig. 1 taken in the direction of the arrows IV-IV;
Fig. 5 is a detailed sectioned view of the mounting system of the invention and roof structure in the region marked "Z" shown in Fig. 4;
Fig. 6 is a perspective view of an ancchoring device which does not form part of the invention but is suitable for a solar panel mounting system as shown Fig. 1;
Fig. 7 is a perspective view of the anchoring device in Fig. 6 showing of the coupling member being connected with the base portion of a mounting member via a snap-fit;
Fig. 8 is a perspective underside view of the anchoring device in Fig. 6 showing of the coupling member of the anchoring device in interlocking engagement with the base portion of a mounting member;
Fig. 9 is a sectioned side view of the mounting system and rooftop shown in Fig. 1 taken in the direction of the arrows IX-IX;
Fig. 10 is a detailed view of the cross-section of the mounting system and rooftop in the region marked "Z" shown in Fig. 9;
Fig. 11 is a perspective view of longitudinally aligned and adjoining mounting members in the region marked "B7" of the mounting system shown in Fig. 1;
Fig. 12 is a detailed sectioned view of the end region of the mounting system shown in Fig. 1 in the direction of the arrows XII-XII;
Fig. 13 is a perspective view of a retaining element not being part of the invention but suitable for the mounting system shown in Fig. 1;
Fig. 14 is an end view of a base portion of a mounting member according to an embodiment of the invention for the mounting system of the invention in Fig. 1;
Fig. 15 is an end view of an upper portion of a mounting member according to an embodiment of the invention for the mounting system of the invention in Fig. 1;
Fig. 16 is an end view of a clamping member not forming part of the invention but suitable for the mounting system as shown in Fig. 1;
Fig. 17 is an end view of an alternative clamping member
Fig. 18 is a perspective view of a footing which does not form part of the invention, suitable for the anchoring device as shown in Fig. 6;
Fig. 19 is a perspective view of a coupling member for the anchoring device as shown in Fig. 6; and
Figs. 20 (a) and (b) are perspective views of a spacer element and alternative spacer element, respectively, suitable for the mounting system as shown in Fig. 1. The spacer element are not part of the invention

### Detailed Description of the Preferred Embodiments

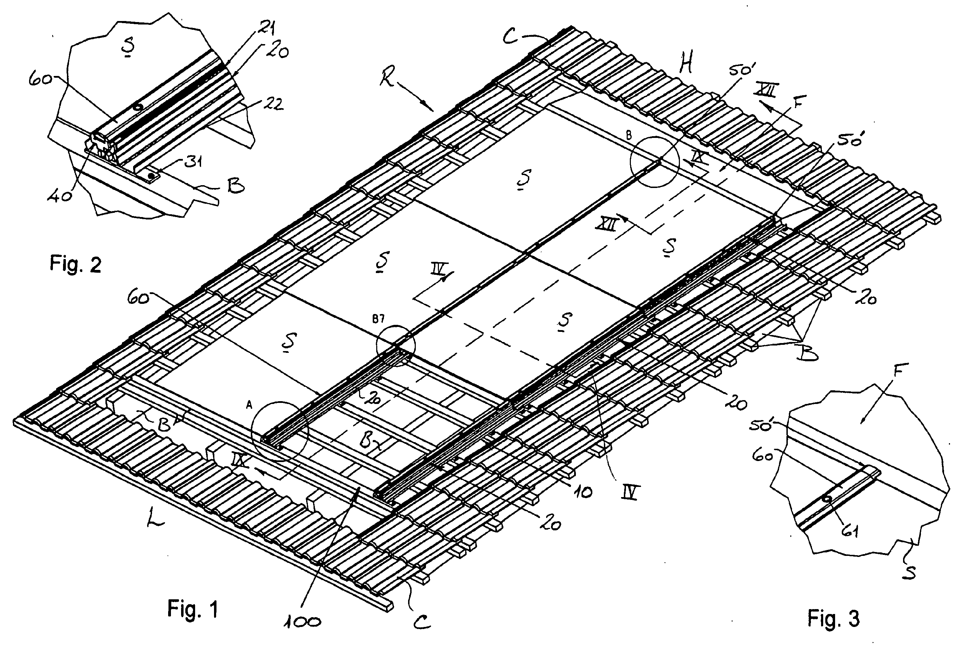

With reference to Fig. 1 of the drawings, a mounting system 100 according to a preferred embodiment of the invention is illustrated in an assembled state installed on a rooftop R. The mounting system 100 shown in Fig. 1 has been designed to carry six rectangular solar panels S securely fixed to a mounting frame 10 of the mounting system in a rectangular array. Five of the solar panels S are shown mounted on the mounting frame 10 and one is absent to reveal parts of the underlying mounting system 100, which will now be described in more detail. The solar panels 5 in this embodiment comprise relatively thin glass photovoltaic panels or modules having a frameless sheet-glass covering. It will be appreciated, however, that other types of solar panels may also be contemplated for use in the mounting system 100 of the invention. The solar panels S are rectangular and typically present a collecting surface with an area in the range of about 0.5 m² to about 4 m², although the area and the precise dimensions of the panels are not critical to the present invention.

The mounting frame 10 of the mounting system 100 shown in Fig. 1 comprises a plurality of elongate mounting members 20, which in this particular embodiment are made up of individual straight elements having a substantially uniform or constant cross-section, and which are formed, for example, as extruded aluminium sections. Thus, the mounting members 20 are elongate structural elements upon which the solar panels are mounted and supported within the frame 10 of the mounting system 100. In the present embodiment the mounting members 20 will hereafter also be referred to as mounting "rails", as they are often known in the art.

The rooftop R shown in Fig. 1 of the drawings, upon which the mounting system 100 of the invention is installed, includes conventional roof cladding C in the form of tiles. Other types of roof cladding material, such as corrugated sheet material (e.g. galvanized or coated steel roof sheeting) or synthetic (e.g. plastic) roof sheeting is, of course, also possible. The roof cladding C is supported on and securely affixed to a series of roof beams B, the beams forming a framework of the roof structure for the building. The roof beams B may be rafters, battens, purlins or stringers, as are typical in a roof structure, and in this example they are timber elements, although steel roof beams are also known. As will be appreciated from the overlapping arrangement of the roof tiles in Fig. 1, the rooftop R in this embodiment is at least slightly angled or pitched from a high side H to a low side L. A pitched or inclined roof is not essential for the mounting system 100 of the invention, but the invention has been conceived with features that make it particularly suitable for use on such angled or inclined structures.

With the mounting system 100 in Fig. 1, the mounting rails 20 are arranged such that they extend substantially parallel to the general plane of the roof and are inclined at about the same angle as the roof itself. In other words, some of the mounting rails 20 are arranged in longitudinal alignment with one another such that they extend directly up the incline of the pitched roof, while others of the mounting rails 20 are arranged substantially parallel to one another and spaced apart at regular intervals approx. corresponding to the width of the individual solar panels S. When installing the solar panel mounting system 100 of this particular embodiment, an area of the original roof cladding C (i.e. tiles) is firstly removed to expose the beams B of the roof structure for installation of the mounting system 100 thereon. An edge region at the periphery of the area where the tiles have been removed can be seen in Fig. 1. The mounting rails 20 are rigidly secured to the structure of the roof with the aid of a plurality of anchoring devices 30, as will be explained in more detail below.

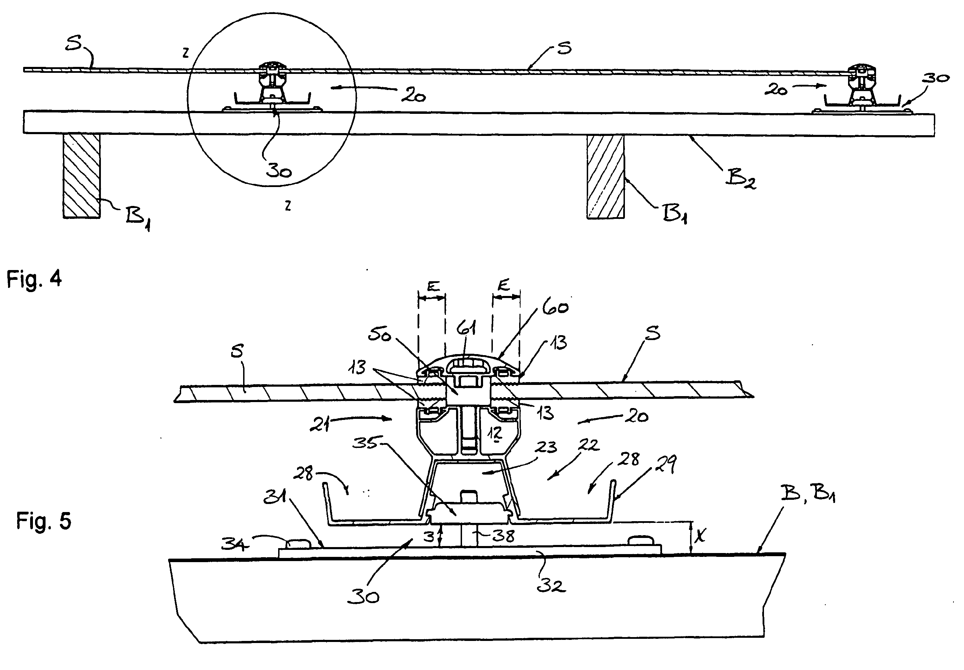

With reference to Figs. 4 and 5 of the drawings, the mounting system 100 of the invention as show in Fig. 1 of the drawings is illustrated in cross-section in the direction of arrows IV-IV, so that the individual mounting rails 20, the anchoring devices 30 with which each of the mounting rails is securely fastened to the beams B of the roof structure, and the solar panels S are clearly illustrated. In this case, the beams B of the roof structure shown in cross-section in Fig. 4 are rafters B₁, whereas the beams shown in side view are cross-beams or battens B₂. The elongate mounting rails 20 are integral members comprising an upper portion 21 with panel seating areas 19 for receiving and fixing an edge region E of a solar panel S and a lower or base portion 22 configured to be coupled with an anchoring device 30 for securing the mounting rail 20 to a beam B of the roof structure.

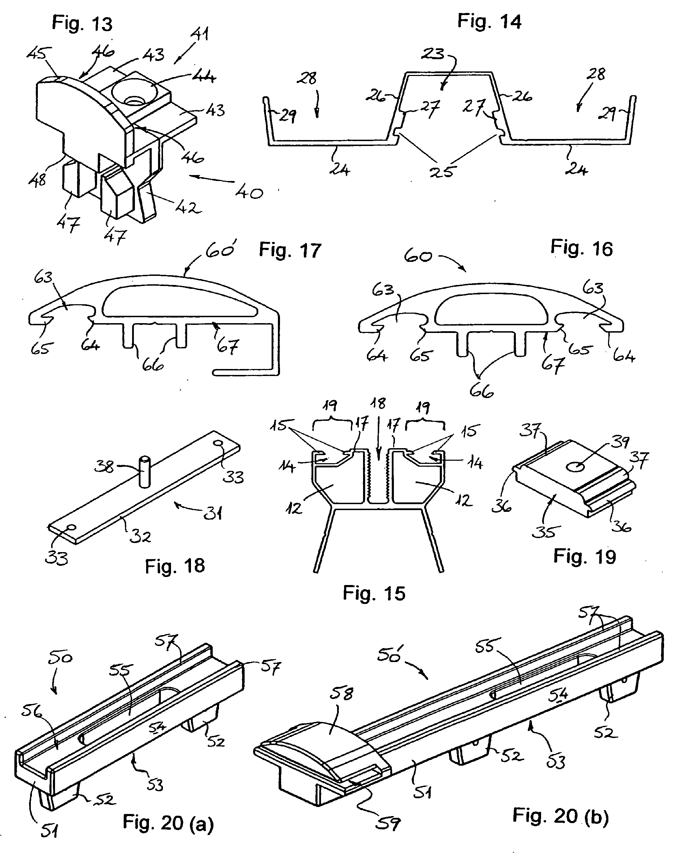

It will be noted that, although the mounting rail 20 is an integral component, the upper portion 21 and the base portion 22 of each mounting rail 20 may be formed as separate components and later rigidly combined (e.g. by welding or by riveting). In this respect, the drawing Figs. 14 and 15 illustrate the base portion 22 and the upper portion 21, respectively, before being combined to provide an integral mounting rail 20. Naturally, however, the upper portion 21 and the base portion 22 need not be formed as separate components but can, from the outset, comprise integral parts of a mounting rail 20 having a unitary construction. In the particular embodiment illustrated, each of the mounting rails 20 has the same configuration and, as such, each mounting rail 20 is adapted to receive an edge region E of two separate solar panels S at laterally opposite sides of the mounting rail. When one of the mounting rails 20 is arranged at an extreme outer periphery of the solar panel array, however, that mounting rail 20 will typically receive and securely fix the edge region E of a solar panel at one side only, as apparent from right-hand side of Fig. 4.

The details of the configuration of the upper portion 21 of the mounting rail 20 will be described later in connection with the attachment of the solar panels S. The base portion 22 of the mounting rail 20, however, includes a longitudinally extending, central channel 23 which opens downwardly to substantially flat surfaces 24 at an underside of the rail, with those surfaces 24 extending to laterally opposite sides of the central channel 23. As can be seen in Figs. 5 and 14, the central, downwardly open channel 23 in the base portion 22 includes a slot or groove 25 formed in each opposite side wall 26 of the channel 23 and extending continuously along the length thereof. That is, the side walls 26 have a relatively thin cross-sectional profile, but include thicker regions 27 in which the respective slots or grooves 25 are provided. As is particularly apparent with reference to Figs. 5 to 8 of the drawings, the slots or grooves 25 formed in the downwardly open channel 23 constitute interconnection elements for interlocking engagement with the anchoring device 30. In addition, the base portion 22 includes two upwardly open channels 28 extending longitudinally of the mounting rail 20. These upwardly open channels 28 are provided at laterally opposite sides of the central, downwardly open channel 23 and include troughs that define the flat underside surfaces 24 of the base portion. In this embodiment, each of the channels 28 projects laterally beyond a lateral extent of the upper portion 21 of the mounting rail 20, with each of the channels 28 terminating in a lateral direction with an upturned edge 29. Although not apparent from the cross-sectional views in Figs. 4 and 5, the base portion 22 of each mounting rail 20 extends longitudinally beyond the upper portion 21 at one end thereof so that the upwardly open channels 28 of that mounting rail 20 can be overlapped with the upwardly open channels 28 of the next longitudinally adjacent or adjoining mounting rail 20. This aspect of the invention will be described in more detail later.

Returning to the manner in which the anchoring devices 30 are employed to secure the mounting rails 20 to the roof structure, further reference is made to Figs. 4 to 8 and Fig. 14 of the drawings. Each anchoring device 30 in this embodiment of the invention comprises a footing 31 in the form of a plate member 32, which is designed to seat stably on an upper surface of a beam B of the roof structure, as shown in Figs. 4 and 5, to provide a solid foundation upon which the plurality of mounting members 20, and thus the entire frame 10 of the mounting system 100, may stand. The footing 31 further includes fastening means in the form of holes 33 in plate member 32 and screw fasteners 34 received therein, with which the anchoring device 30 is rigidly attached to the roof structure. The anchoring device 30 further includes a coupling member 35 for connection with the mounting rail 20. In this embodiment, the coupling member 35 has a generally rectangular or block-shaped body portion with a pair of laterally opposite ridge- or tongue-like projections 36. As is again apparent from Figs. 5 to 8 of the drawings, these ridge- or tongue-like projections 36 form interconnection elements for secure engagement with the slots or grooves 25 formed the downwardly open channel 23 in base portion 22 of the mounting rail 20. Accordingly, the ridge- or tongue-like projections 36 are provided with a counterpart or corresponding geometry to the slots or grooves 25.

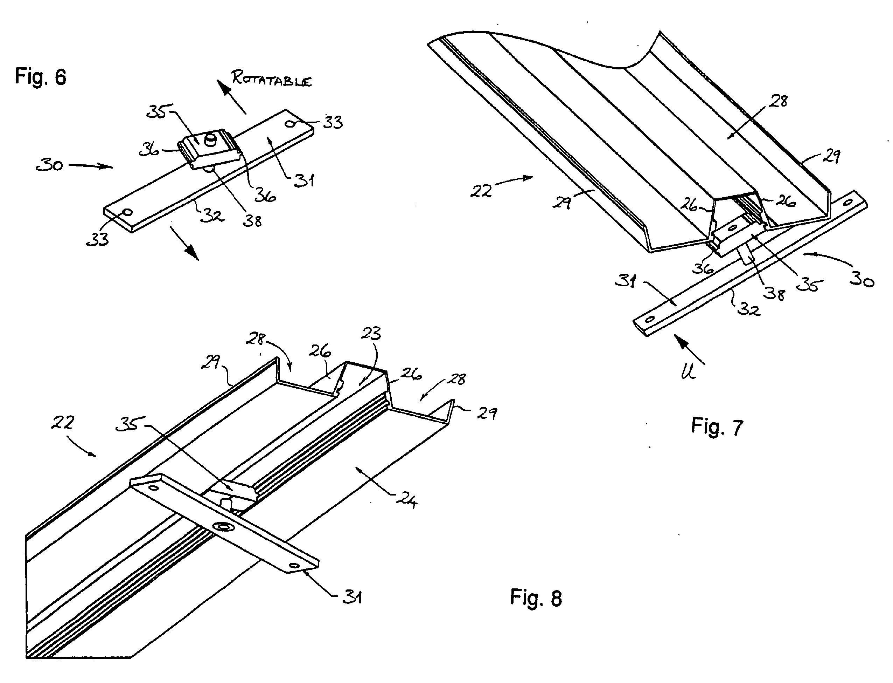

With reference to Figs. 6 to 8 of the drawings, the interaction between the mounting rail 20 and an anchoring device 30 is illustrated with the base portion 22 of the mounting rail 20 shown in isolation. As shown in Fig. 7, for example, the coupling member 35 is configured to be selectively connected with the mounting rail 20 at effectively any position along the length of the downwardly open channel 23 in the base portion 22. In particular, one of the tongue-like projections 36 at one side of coupling member 35 can be inserted into the slot or groove 25 at the corresponding side of channel 23 at essentially any position along the channel 23. By then pivoting coupling member 35 in the direction of arrow U in Fig. 7 to move the other tongue-like projection 36 at other side of the coupling member towards the groove 25 formed in the opposite wall 24 of the channel 23, the body portion and/or that tongue-like projection 36 of the coupling member 35 then comes into contact with the thicker region 27 of the channel 23. With reference to Fig. 19, the body portion of the coupling member 35 includes upper surfaces 37 that are rounded, particular along edge regions thereof. These rounded or curved surfaces 37, together with angled surfaces of the thicker region 27 in the side wall 24 of the downwardly open channel 23, facilitate sliding contact between the coupling member 35 and the side wall 24 of the channel 23 to bring the second tongue-like projection 36 into alignment with the second slot or groove 25. At the same time, the relatively thin profile of the side wall 24 of the channel 23 can resiliently flex or deform due to the contact generated by the upward pivoting movement of coupling member 35 in the direction of arrow U. As a result, when the second tongue-like projection 36 comes into alignment with the respective groove or slot 25, that projection 36 then snaps or clicks into engagement with the slot 25 via a snap-fit connection.

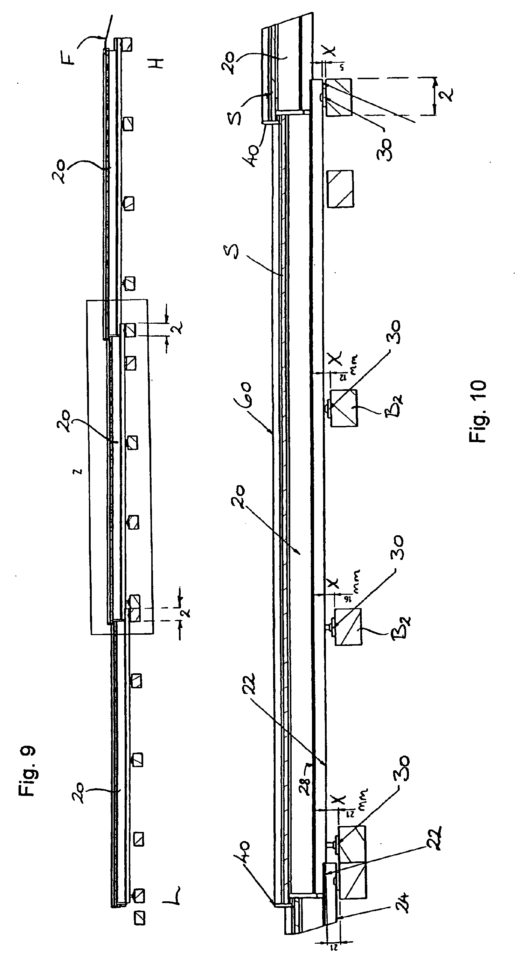

As is also apparent from Figs. 5 to 8 of the drawings, the coupling member 35 is connected to the footing 31 of the anchoring device 30 via a rod 38 which is rigidly fixed to, and upstanding from, the plate member 32 of the footing 31. The rod 38 has an external screw thread and is received within a threaded bore 39 formed through a central part of the block-like body portion of the coupling member 35. By relatively rotating the coupling member 35 on the threaded rod 38, the coupling member 35 can be moved axially along the rod 38 towards or away from the plate member 32 of the footing 31. In this way, a spacing 3 between the coupling member 35 and the footing 31 can be selectively varied by a user between a predetermined minimum (i.e. where the coupling member 35 abuts or contacts the plate 32 of the footing 31) and a predetermined maximum (i.e. the top of the rod 38). Furthermore, with reference to drawing Fig. 5, the positioning of coupling member 35 along the length of the rod 38 not only determines the spacing 3 between the coupling member 35 and the footing 31, but also adjusts and/or sets an elevation X of the respective mounting rail 20 relative to the roof structure, specifically, the beam B. Thus, after the coupling member has been connected via snap-fit to at a desired position along the length of the base portion 22, the height or elevation of the mounting rail 20 can be adjusted by rotating the footing 31 (and spacer rod 38) of the anchoring device 30 relative to the coupling member 35 connected with the rail 20. Once the correct or desired elevation X has been obtained, the footing 31 can then be secured to the top of the beam B to set the adjusted elevation and to rigidly secure anchor device 30 to the roof structure. The reason why an adjustable anchoring device 30 is particularly advantageous in a solar panel mounting system 100 according to the invention will become more clear with reference with Figs. 9 and 10 of the drawings.

Fig. 9 of the drawings illustrates a longitudinal cross-section of the mounting system 100 shown in Fig. 1 taken along the lines IX-IX. Thus, in Fig. 9, beams B (in this case, cross-beams or battens B₂) of the roof structure are shown in cross-section and three longitudinally aligned, elongate mounting members or mounting rails 20 of the mounting frame 10 can be seen from the side extending across an upper surface of the beams B in a direction generally transverse to the length of the beams B. As noted at the outset, the rooftop R in this embodiment is typically angled or pitched from a high side H to a low side L in the direction the corrugations in the cladding C (i.e. roof tiles), which corrugations operate as channels to carry or direct rain-water off the roof. For simplicity, the cross-section of Fig. 9 is shown in a substantially horizontal orientation (i.e. without the roof pitch) but, in fact, the rooftop R is angled to slope downwardly from right to left in this case. The horizontal representation of Fig. 9 is useful because it helps illustrate that the upper surfaces of the roof beams B together form seating surfaces which generally lie within a common plane, and these surfaces ordinarily support the tiles of the roof cladding C. As this cladding C has been partially removed for the installation of the solar panel array, however, a large section of the beam surfaces are now free for the support and attachment of the mounting rails 20 in the mounting system 100.

As is apparent from Fig. 1 and Figs. 9 and 10 of the drawings, in addition to being arranged in parallel, spaced apart relation to one another, the mounting rails 20 are also arranged in longitudinal alignment with one another extending up the angle of roof pitch or inclination. A particular aspect of the solar panel mounting system 100 of the invention resides in the mounting rails 20 being configured to partially overlap with a longitudinally adjoining or adjacent mounting rail 20. This overlap firstly serves to ensure that a lower edge region of a solar panel S mounted in the array at a higher side of the rooftop R overlies (and overlaps with) an upper edge region of an adjacent solar panel S mounted lower down the rooftop in the array. This overlap in the respective lower and upper edge regions of the solar panels S is typically over a width in the range of about 1 cm to 2 cm, and corresponds to an edge region of the solar panels S which, in any case, is typically free of photovoltaic cells. Secondly, the mounting rails 20 being configured to overlap with one another serves to ensure continuity of water run-off or drainage via the upwardly open channels 28. As noted earlier, the base portion 22 of each mounting rail 20 extends longitudinally beyond the upper portion 21 at one end thereof, in particular at the end directed to the high side H of the rooftop, as can be seen in Figs. 9 and 10. Thus, the base portion 22 of each mounting rail 20 includes a region 2 of longitudinal offset relative to the upper portion 21. This offset region or extension 2 is typically about 5 cm to 6 cm in length and is configured so that the upwardly open channels 28 of one mounting rail 20 can be overlapped with the upwardly open channels 28 of the next longitudinally adjacent or adjoining mounting rail 20 to provide drainage integrity and continuity. In particular, the lower end regions of the upwardly open channels 28 of the higher extending mounting rail 20 overlie the extension or offset region 2 at the upper end of the upwardly open channels 28 of the lower extending mounting rail 20.

In each case, the overlap of the mounting rails 20 in the mounting system 100 of the invention is designed to ensure the integrity and continuity of rainwater run-off and drainage so that the solar panel array may effectively function as part of the building envelope. In this way, both the solar panels S themselves and the upwardly open channels 28 provide unimpeded run-off or drainage of rainwater, snow-melt and/or condensate from the rooftop R, while also substantially inhibiting unwanted ingress of water into the roof cavity or roof structure. As such, a solar panel array based on the mounting system 100 of the invention can effectively form a weather-resistant part of the building envelope without separately or additionally covering and sealing the rooftop area covered by the solar panels with a weather-proof layer.

In view of the fact that the anchoring device 30 is to be secured to the cross-beams or battens B₂, the positions of which will differ in each roof structure, and in view of the fact that the length of the mounting rails 20 is predefined in this embodiment by the length of the solar panels S, the anchoring device 30 solves two significant problems. On the one hand, the anchoring device 30 is able to secure the mounting rail 20 to the beam B at any desired point (and preferably at least three) along the length of the mounting rail 20 - i.e. selected in dependence upon locations of the beams B. On the other hand, the anchoring device 30 is able to compensate for any height or elevation discrepancies between the beams B of the roof structure and also set elevation differences along the length of each mounting rail 20 for the longitudinally overlapping arrangement of the mounting rails. As can be particularly clearly seen in Fig. 10 of the drawings, each of the anchoring devices 30 employed along the length of the middle mounting rail 20 has been selectively adjusted to provide a different elevation X of the mounting rail 20 with respect to the respective cross-beam B₂ of the roof structure.

With reference again to Figs. 4 and 5, as well as to Figs. 14 and 15 of the drawings, the manner in which the respective edge regions E of the solar panels S are received on and secured to the mounting rails 20 substantially corresponds to the system described in co-pending International Patent Application WO 2010/112049 A1, the contents of which are incorporated herein by reference. As shown in Fig. 15, the mounting rail 20 comprises two seating areas 19 formed at an upper side of the mounting rail. Each of the seating areas 19 is adapted to receive and support the edge region E of one of the solar panels S, with each of these two panel seating areas 19 extending along the length of the mounting rail 20 parallel to the edge region E of the solar panel it receives and supports. In this regard, it will be noted that the width of each panel seating area 19 and correspondingly, therefore, the width of the edge region E of each solar panel S to be supported and fixed to the mounting rail 20 is typically in the range of about 10 mm to 50 mm, and preferably in the range of about 20 mm to 40 mm. Thus, the overall width of the upper portion 21 of each mounting rail 20 (i.e. the width dimension of the section shown in Fig. 15) is in the range of about 30 mm to 120 mm, and preferably in the range of about 60 mm to 90 mm. Naturally, the upwardly open channels 28 in the base portion 22 of each mounting rail 20 may extend beyond this width range.

Extending longitudinally of the mounting rail 20 and arranged centrally of the upper portion 21 of the mounting rail section is a central channel 18 which opens to the upper side of the mounting rail 20 between a pair of adjacent and parallel extending bearing surfaces 17. The purpose and operation of these bearing surfaces 17 will be explained in further later. The central upper channel 18 has a pair of substantially parallel walls 16, the inner surfaces of which have a surface profile, e.g. serrations, which combine or cooperate to form a partial screw thread for interaction with a complementary threaded fastener. Thus, the two panel seating areas 19 formed at the upper side of the mounting rail 20 extend parallel to the first channel 18 on laterally opposite sides of the mounting rail 20.

Each of the panel seating areas 19 has inner and outer flange elements 15, the upper surfaces of which are arranged in essentially the same plane and are adapted to receive and support the edge region E of the solar panel S. A longitudinally extending gap between each of the inner and outer flange elements 15 opens into a lateral upper channel 14 extending along the length of the mounting rail 20 in each of the panel seating areas 19. As can be seen with attention to the detail of Fig. 5, the edge regions E of each of the solar panels S are not seated in direct contact with the mounting rails 20. Rather, relatively soft and resilient seating elements 13 are provided in each of the panel seating areas 19. As the solar panels S in this embodiment are frameless and merely comprise edge regions E of fragile glass material, it is naturally desirable to cushion contact with, and/or clamping of, the edge regions E of the solar panels. The seating elements 13 comprise rectangular strips of synthetic rubber and include attachment projections which extend into the respective lateral channels 14. A barb- or hook-like rim of the attachment projection engages an underside of the inner and outer flange elements 15 to connect the seating elements 13 with the mounting rail 20. The rectangular, block-like strip of each seating element 13 has an overall width which is essentially the same as the width of the respective panel seating area 19 and extends in Fig. 5 from a small shoulder at an innermost edge of the inner flange to the outer edge of the outer flange. To ensure an even support of the solar panels S in the panel seating areas 19, the seating elements 13 typically extend over substantially the full length dimension of the edge region E of the solar panels S received in and supported on the seating areas 19. The seating elements 13 are desirably combined with the mounting rails 20 in a pre-assembly procedure so that installation of the solar panel array, conducted e.g. on the roof-top, is simplified for the person carrying out the installation.

With reference now to Figs. 2, 11 and 13 of the drawings, it will be seen that each of the mounting rails 20 in the mounting system 100 shown in Fig. 1 comprises a retaining element 40 mounted at its lower end. In this embodiment, a length dimension of the upper portion 21 (including a panel seating area 19) of each mounting rail 20 essentially corresponds to a length dimension of the edge region E of each of the solar panels S to be supported on the mounting rails 20. The retaining element 40 at the lower end of each mounting rail 20 provides a stop or limit means to retain the respective solar panels S in the desired position in the seating area 19.

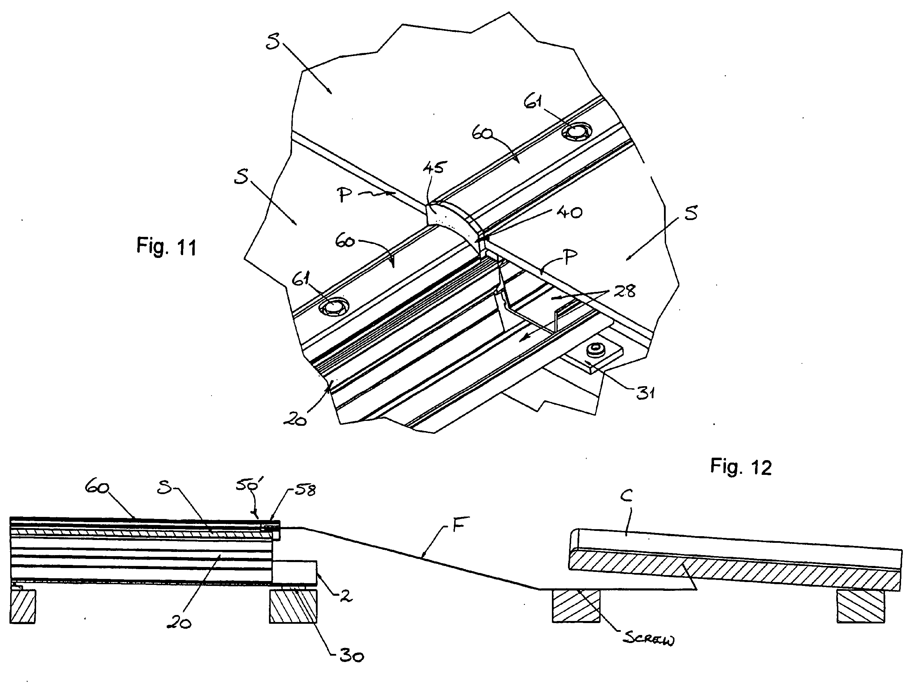

Referring to Figs. 11 and 13, the latter of which specifically illustrates the retaining element 40 in isolation, it will be seen that each retaining element 40 comprises a body portion 41 configured to be securely fastened to an axial end region of one of the mounting rails 20. The body portion 41 includes a generally flat, plate-like member 42 configured to engage a facing end surface of the mounting rail 20, and upper lateral flange members 43 configured, in use, to form extensions of the panel seating area 19. The body portion 41 of the retaining element 40 also includes a circular aperture 44 for receiving a fastener, e.g. a bolt or screw, centrally between the lateral flange members 43 for rigidly securing the retaining element 40 to an axial end region of one of the mounting rails 20. The body portion 41 furthermore comprises a stop or limit member 45, which in this embodiment is also substantially flat or plate-like and which extends upwardly of the lateral flange members 43 that correspond to the panel seating area 19. The stop or limit member 45 presents one or more abutment surface 46 adapted to engage with and support a peripheral edge P of the solar panel S. As can be seen in Fig. 13 of the drawings, for example, the lateral stop surface(s) 46 of the limit member 45 extend(s) laterally across the panel seating area 19 of the mounting rail 20 and project(s) upwardly somewhat beyond the height of the peripheral edge P of the solar panels S positioned on the mounting rail 20.

As will be understood from International Patent Application WO 2010/112049 A1, the fastener (not shown) to be received in the aperture 44 may be a threaded bolt, an external thread of which has a profile complementary to the surfaces of the walls 16 defining the partial screw thread within the central first upper channel 18. Thus, the bolt fastener cooperates with the central upper channel 18 of the mounting rail 20 for securely fastening the retaining element 40 to the mounting rail 20. In addition, the fastening means via bolt and aperture 44, together with the plate-like member 42 function as locating means for locating or positioning the retaining element 40 in a desired predetermined orientation at the facing end region of the mounting rail 20. In particular, when fastened to the mounting rail 20, the stop or limit member 45 of the retaining element 40 extends across a width of the mounting rail 20 such that each abutment or stop surface 46 is located across each of the respective panel seating areas 19 to engage with the lower peripheral edge P in the edge region E of each solar panel S received in those seating areas 19.

With further reference to drawing Fig. 13, it will be apparent that each retaining element 40 also includes a pair of forward protrusions 47 which stand out from a front face of the plate-like member 42 and a downward protrusion 48 below the stop or limit member 45. Each of these protrusions 47, 48 forms positioning means configured to assist positioning an end of the mounting rail 20 to which the retaining element 40 is fastened (e.g. via bolt and aperture 44) with respect to the end of an adjacent and longitudinally aligned mounting rail 20. Specifically, the protrusions 47 from the front face or side of the plate-like member 42 may be configured to be received within respective cavities 12 at an end region of the longitudinally adjacent mounting rail 20. That is, the protrusions 47 may be sized and dimensioned to fit into the respective cavities 12 relatively precisely (i.e. with little "play"), thereby helping to achieve a desired alignment of the two longitudinally adjacent mounting rails 20. The protrusion 48, on the other hand, is configured to rest or seat upon an upper of the longitudinally adjacent mounting rail 20 surface, in particular upon the bearing surfaces 17 over the central upper channel 18, when the forward protrusions 47 are received within the respective cavities 12. Thus, the protrusions 47, 48 effect a positioning of that end of the mounting rail 20 to which the retaining element 40 is rigidly bolted at an elevation relative to a second longitudinally adjacent mounting rail 20. More particularly, the protrusions 47, 48 interact with the second adjacent mounting rail 20 such that the lateral flange members 43 of the retaining element 40 (and thus also the contiguous panel seating areas 19) of the mounting rail 20 to which the retaining element 40 is bolted are elevated with respect to the second mounting rail 20. The difference in elevation or height is fixed or predetermined and defined by the geometry of the retaining element 40 itself, typically selected to be in the range of about 1 cm to 3 cm. The resulting difference or variation in elevation or height of the adjacent end regions of the two mounting rails is apparent from drawing Figs. 9 and 10, and is clearly visible in Fig. 11. Thus, the retaining element 40 plays an important role in achieving the desired overlap between the mounting rails 20 and the panels S (discussed previously) in a regular and repeatable manner.

By rigidly securing a retaining element 40 at an end of each of the mounting rails 20 to define a stop or limit for the edge regions E of the solar panels S to be received and fixed in the panel seating areas 19, placement and assembly of each of the solar panels S within the mounting system 100 is substantially simplified compared with prior art arrangements. In particular, the areas 19 for locating the panels on each of the mounting rails 20 are clearly recognizable for a person placing the solar panels S in position on the mounting rails 20 for subsequent attachment. The retaining element 40 also prevents the associated solar panel from inadvertently slipping out of position or sliding off the mounting rail 20 before the solar panel S is rigidly fixed to the mounting rail 20. Furthermore, each retaining element 40 is configured to provide a preset or predetermined axial or longitudinal positioning of the aligned mounting rails 20 with respect to one another. That is, the positioning means 47, 48 facilitate both longitudinal alignment of the mounting rails, as well as their differential elevation or axial offset from one another. In this way, the solar panels S are mounted on the rails 20 with a slight overlap (i.e. in the range of about 10 mm to 20 mm) along their upper and lower edge regions, providing the staggered or shingled arrangement shown in Figs. 9 to 11, which promotes rainwater run-off and inhibits ingress of rainwater into the roof structure.

As a result, a single operator is able to assemble the mounting frame 10 with the desired level of overlap between the longitudinally adjacent mounting rails 20 more easily. Furthermore, the operator can place the solar panels S in mounting positions clearly delimited by the retaining elements 40, sound in the knowledge that the solar panels S will not inadvertently slip out of position or off the mounting rails 20, despite the angular inclination of the pitched roof. The rigidly attached retaining elements 40 hold the individual panels in the desired position leaving the operator free to place another panel and/or to complete the fixture of the solar panels S already placed in their mounting positions. In addition, the retaining elements 40 cooperate with the mounting rails 20 to provide a predetermined degree of edge overlap between each of the rows of solar panels S in the solar panel array assembly.

With reference now to Fig. 5 and Fig. 20(a) of the drawings, it will be noted that the solar panel mounting system 100 of the invention includes a plurality of spacer elements 50 provided spaced apart along the longitudinal extent of the mounting rails 20. This will also be understood by referring to the description in co-pending International Patent Application WO 2010/112049 A1. As seen in Fig. 20(a), which illustrates an example of the spacer element 50 in isolation, each of the spacer elements 50 includes an elongate, generally rectangular body portion 51, from which depend two tongue-like projections 52. These projections 52 are configured to be received within the first channel 18 of the mounting rail 20, as seen in Fig. 5. The tongue-like protrusions 52 thus form locating means for locating or positioning each spacer element 50 in a predetermined orientation with respect to the mounting rails 20. In this regard, it will be noted that the body portion 51 of each spacer element 50 assumes a position extending along an upper surface of the mounting rail 20 seated on the bearing surfaces 17 on either side of the opening to the first channel 18. That is, an underside 53 of the body portion 51 is adapted to seat against the bearing surfaces 17 and the spacer element 50 has a width which essentially corresponds to the width of those bearing surfaces 17.

As a result, lateral or side surfaces 54 of the body portion 51 of each spacer element 50 serve to define a limit or boundary of the panel seating areas 19 at the laterally opposite sides of the mounting rail 20. Furthermore, the body portion 51 of the spacer element 50 physically separates the two panel seating areas 19 on opposite sides of the mounting rail 20 from one another. The consequence and benefit of this arrangement is apparent from drawing Fig. 5. In particular, the frameless peripheral edges P at the sides of each of the solar panels S are located adjacent to and/or in abutment with the lateral or side surface 54 of the spacer element 50 and are thereby prevented from contacting each other. The spacer elements 50 therefore not only clearly delimit or define the panel seating area 19 for receiving the edge region E of a solar panel S on the mounting rails 20, but also separate the two panel seating areas 19 from one another such that the edges of the panels which are susceptible to damage from undesired impact or contact with other hard objects are protected. In this connection, the spacer elements 50 are typically fabricated from a robust polymer plastic, such as polyethylene. The spacer elements 50 also have the further important characteristic that they cooperate with the clamping rail 40 to limit the amount of clamping pressure which may be applied to the edge regions E of the solar panels received in the panel seating areas 19.

As noted above, the mounting rails 20 are arranged in the mounting frame 10 both longitudinally aligned, and also laterally spaced apart and substantially parallel with one another. The laterally spaced mounting rails are centred at distances just slightly larger than the width of the solar panels S, such that the solar panels S mounted thereon extend between two of the mounting rails 20. The distance between centres of two parallel spaced mounting rails 20 will typically exceed the width of the solar panels S by an amount approximately corresponding to the width of the spacer elements 50 - i.e. typically in the range of about 20 mm to about 50 mm.

With reference to Fig. 20(a) of the drawings, it will be seen that the body portion 51 of spacer element 50 includes an elongate aperture or slot 55 for accommodating a fastening bolt 61. This and other important features of the spacer elements 50 will be explained in the following description of the manner in which the respective edge regions E of the solar panels S are securely fixed to the mounting rails 20. In this respect, with reference to Figs. 4, 5 and 11 of the drawings and as described in detail in WO 2010/11 2049 A1, the mounting system 100 comprises fixing means in the form of elongate clamping members or clamping rails 60, 60' examples of which are specifically illustrated in cross-section in Figs. 16 and 17. The clamping rails 60, 60' extend over a substantial length of the mounting rails 20 and typically extend at least about two thirds, more preferably at least four-fifths, of the length dimension of the edge region E of the solar panels S to ensure that a clamping force applied to the edge region of the panels is substantially uniformly distributed. The clamping rails 60, 60' are secured to respective mounting rails 20 in clamping engagement with the edge region(s) E of the respective solar panel(s). The fastening bolt 61 is threaded and is adapted to engage with the partial thread of the surface profile formed on the walls 24 forming the first channel 18.

With reference to Figs. 16 and 17 of the drawings, the cross-sections of a standard clamping rail 60 and a peripheral clamping rail 60' are shown. Each clamping rail 60, 60' is provided with (e.g. four) holes 62 spaced apart along the length thereof for receiving a respective fastening bolt or screw 61. Each clamping rail 60, 60' also includes at least one elongate cavity or channel 63, an opening of which is bounded by an outer flange element 64 and inner flange element 65, for receiving a strip- or pad-like seating element 13 for direct contact with the surface of the solar panel S in the edge region E thereof received in the panel seating area 19 - i.e. in a manner directly analogous to the provision of the seating elements 13 in the second channels 27 formed in the mounting rails 20, as described above.

Each of the clamping rails 60, 60' incorporates stop means, provided here in the form of rib- or fin-like projections 66, for stopping or limiting the clamping force applied to the edge regions E of the solar panels S. With reference to Fig. 5 of the drawings, when the fastening bolt 61 is tightened by screwing it into the partially threaded profile in the walls 24 of the first channel 18, the head of the bolt 61 draws the clamping rail 60 down upon the edge regions E of the solar panels received in the panel seating area 19. Each of the strip-like rubber seating elements 13 engages the upper and lower surfaces of the solar panels S in the edge regions E received in the panel seating areas 19 and is compressed as the clamping force applied by the fastening bolt 61 increases. For a given thickness of the solar panels S, the thickness of each of the strip-like seating elements 13 is selected in combination with the height of the projections 66 so that, after a predetermined amount of tightening of the fastening bolt 61, the projections 66 engage an upper surface 56 of the body portion 51 of the spacer element 50.

Similarly, each of the spacer elements 50 also includes stop means for stopping or limiting the clamping force applied to the solar panels. These stop means may also be in the form of one or more projections, in this case a pair of upstanding ridge-like projections 57, which are adapted to engage an underside 67 of the clamping rail. Accordingly, after the bolts 61 have been turned and tightened a predetermined amount, the projections 66 on the underside of the clamping rail 60 engage the upper surface 56 of the spacer element 50 and the projections 57 at the upper side of the spacer element 50 engage the underside 67 of the clamping rail 60. As each of the spacer elements 50 is relatively rigid (i.e. substantially less compressible than the rubber seating elements 13), the body portions 51 of the spacer elements seated on the bearing surfaces 17 of the mounting rail 20 limit the clamping force applied to the edge regions E of the solar panels.

As is described in WO 2010/11 2049 A1, the spacer elements 50 are provided spaced apart along the longitudinal length of the mounting rail 20. The fastening bolts 61 do not directly engage with the spacer elements 50, but rather simply extend through the elongated aperture or slot 55 located centrally in each of the spacer elements 50. The elongated form of each aperture 55 simplifies the registration between the spacer elements 50 and the three bolt holes 62 formed in each of the clamping rails 60, 60'. In this regard, it will be noted that the spacer elements 50 are typically positioned on the mounting rails 20 by hand by the person assembling the mounting system 100. Thus, after the mounting frame 10 is assembled on the supporting structure (i.e. in this case, the pitched roof), the spacer elements 50 are placed on the mounting rails 20 by inserting the tongue-like projections 52 into the first channel 18 at the upper side of the mounting rail. The individual spacer elements 50 are placed to approximately correspond to the positions of the bolt holes 62 formed in each of the clamping rails 60, 60' to be fastened later. The elongate nature of the aperture 55 therefore provides a certain amount of flexibility in the positioning of the spacer elements 50 and a precise alignment or registration with the fastening holes 62 in the clamping rails 60, 60' is not required. The spacer elements 50 are ultimately held fixed in their positions through the clamping effect described above. In addition, a degree of interference between outer surfaces of the tongue-like projections 52 and the profiled surface of the walls 24 inside the first channel 18 may be useful to hold (e.g. lightly hold) the spacer elements 50 at the positions where they are placed by the worker to avoid inadvertent and unwanted movement (e.g. sliding movement) of the spacer elements 50 out of their positions along the mounting rails 20 before the clamping members 60, 60' are applied.

Drawing Fig. 20(b) illustrates a particularly preferred spacer element 50', which is a variation of the spacer element 50 in Fig. 20(a) and has been developed for use at the extreme edge regions of the mounting frame 10. The features of the spacer element 50' having the same appearance and reference numerals as those described for the spacer element 50 shown in Fig. 20(a) operate in the same manner. The purpose of the different features of spacer element 50', however, are apparent from Fig. 3 and 12, which illustrate the use of spacer element 50' shown in Fig. 20(b) at the uppermost edge region of the solar panel array. As is visible in Fig. 20(b), the spacer element 50' has an extended body portion 51, one end of which includes a holder means 58 for receiving and holding an edge region of sheet material, which is designed to form flashing F at the upper periphery of the solar panel array. In particular, the holder means 58 comprises a pair of jaws defining a slot 59 therebetween into which an edge of the flashing material F is inserted. The jaws of the holder means 58 are configured to grip or clamp the flashing sheet F at a position such that the flashing F overlies the uppermost peripheral edges of the solar panels S in the solar panel array. The flashing sheet may also be fastened (e.g. screwed) to the top of one of the roof cross-beams or battens B₂.

By providing the spacer element 50' with this holder means 58, the flashing sheet F can be securely and accurately positioned with respect to the solar panel array without additional adaptation of the basic sheet material F being necessary. Further, the jaws defining the slot 59, which may have a depth in the range of 2 cm to 8 cm, preferably only grip the edge of the flashing sheet F relatively lightly such that a sideways or lateral movement or displacement of the sheet is possible, thereby also facilitating optimal position adjustment.

After the mounting frame 10 is securely and rigidly assembled and established on the pitched roof, the worker can commence placing the solar panels S in their respective positions. In this regard, the retaining elements 40, which may have been rigidly preassembled with the mounting rails 20, not only clearly indicate the position of the lower peripheral edge P of the respective solar panels S, they also prevent any undesired movement of the panels before the panels are clamped in position. Similarly, the spacer elements 50 located along the lengths of the mounting rails 20 clearly delimit the panel seating area 19 on each of the mounting rails and protect the susceptible edge regions E of the glass sheets from damage. After the solar panels have been placed in their mounting positions, the clamping rails 60, 60' are then applied to securely fix the edge regions E of the solar panels to the mounting rails 20, as described above.

It will be appreciated that the above description of the preferred embodiments of the invention with reference to the drawings has been made by way of example only. Accordingly, a person skilled in the art will appreciate that various changes, modifications and/or additions may be made to the parts particularly described and illustrated without departing from the scope of the invention as defined in the appended claims.

## Claims

1. Mounting system (100) for mounting one or more solar panels (S), comprising:
a plurality of elongate mounting members (20) adapted to be arranged and secured in longitudinal alignment with one another for supporting one or more solar panels (S) thereon; and
a plurality of anchoring devices (30) for securing each of the mounting members (20) to a support structure,
wherein each of the mounting members (20) comprises:
an upper portion (21) adapted to receive and support an edge region (E) of a solar panel (S), and
a base portion (22) configured for connection with one or more of the anchoring devices (30) along substantially the entire length of the mounting member (20),
**characterized in that** the base portion (22) is longitudinally offset from and/or extends longitudinally beyond the upper portion (21), such that the base portion (22) of the mounting member (20) is configured to overlap with the base portion (22) of a longitudinally adjacent or adjoining mounting member (20).

2. Mounting system (100) according to claim 1, wherein the base portion (22) includes at least one longitudinally extending channel (28) which is upwardly open for capturing and/or directing water ingress under the solar panels (S), wherein said at least one upwardly open channel (28) of the base portion (22) is adapted to overlap in the longitudinal direction with a respective upwardly open channel (28) in the base portion (22) of a longitudinally adjacent or adjoining mounting member (20).

3. Mounting system (100) according to claim 1 or claim 2, wherein a panel seating area (19) on each mounting member (20) for receiving and fixing the edge region (E) of the solar panel (S) extends longitudinally of the mounting member (20), and wherein the at least one upwardly open channel (28) projects laterally to a side of the respective mounting member (20) beyond a lateral extent of the panel seating area (19) on that mounting member (20).

4. Mounting system (100) according to any one of claims 1 to 3, wherein the base portion (22) includes a channel (23) which opens downwardly and extends longitudinally of the mounting member (20) for receiving a coupling member (35) of one of the anchoring devices (30).

5. Mounting system (100) according to any one of claims 1 to 4, wherein the plurality of elongate mounting members (20) are also adapted to be arranged and secured substantially parallel to and laterally spaced from one another, such that the elongate mounting members (20) form a mounting frame (10) for supporting an array of the solar panels (S) thereon, with each solar panel (S) extending between at least two laterally spaced mounting members (20).

## Patentansprüche

1. Montagesystem (100) zum Montieren eines oder mehrerer Solarpaneele (S), umfassend:
- eine Mehrzahl von länglichen Montageelementen (20), die geeignet sind, in Längsausrichtung zueinander angeordnet und gesichert zu werden, um ein oder mehrerer Solarpaneele (S) darauf zu unterstützen; und
- eine Mehrzahl von Verankerungsvorrichtungen (30), um jedes der Montageelemente (20) an einer Unterstützungsstruktur zu sichern,
wobei jedes der Montagelemente (20) umfasst:
- einen oberen Abschnitt (21), der geeignet ist, eine Randregion (E) eines Solarpaneels (S) aufzunehmen und zu unterstützen, und
- einen Fußabschnitt (22), der für eine Verbindung mit einem oder mehreren der Verankerungsvorrichtungen (30) entlang im Wesentlichen der gesamten Länge des Montageelements (20) konfiguriert ist,
**dadurch gekennzeichnet, dass** der Fußabschnitt (22) in Längsrichtung gegenüber dem oberen Abschnitt (21) versetzt ist und/oder sich in Längsrichtung über den oberen Abschnitt (21) hinaus erstreckt, so dass der Fußabschnitt (22) des Montageelements (20) konfiguriert ist, sich mit einem Fußabschnitt (22) eines in Längsrichtung benachbarten oder angrenzenden Montageelements (20) zu überlappen.

2. Montagsystem (100) nach Anspruch 1, wobei der Fußabschnitt (22) wenigstens einen sich in Längsrichtung erstreckenden Kanal (28) umfasst, welcher nach oben hin hoffen ist, um Eindringwasser unter dem Solarpaneel (S) aufzufangen und/oder zu leiten, wobei der wenigstens eine nach oben hin offene Kanal (28) des Fußabschnitts (22) geeignet ist, sich in der Längsrichtung mit einem entsprechenden, nach oben hin offenen Kanal (28) in dem Fußabschnitt (22) eines in Längsrichtung benachbarten oder angrenzenden Montageelements (20) zu überlappen.

3. Montagesystem (100) nach Anspruch 1 oder Anspruch 2, wobei sich ein Paneel-Aufnahmebereich (19) an jedem Montageelement (20) zum Aufnehmen und Fixieren der Randregion (E) des Solarpaneels (S) in Längsrichtung des Montageelements (20) erstreckt, und wobei der wenigstens eine nach oben hin offene Kanal (28) lateral zu einer Seite des entsprechenden Montageelements (20) über eine laterale Ausdehnung des Paneel-Aufnahmebereichs (19) an dem Montagelement (20) hinaus vorsteht.

4. Montagesystem (100) nach einem der Ansprüche 1 bis 3, wobei der Fußabschnitt (22) einen Kanal (23) umfasst, welcher sich nach unten hin öffnet und sich in Längsrichtung des Montageelements (20) erstreckt, um ein Kopplungselements (35) von einer der Verankerungsvorrichtungen (30) aufzunehmen.

5. Montagesystem (100) nach einem der Ansprüche 1 bis 4, wobei die Mehrzahl von länglichen Montageelementen (20) auch geeignet ist, im Wesentlichen parallel und mit lateralem Abstand zueinander angeordnet und gesichert zu werden, so dass die länglichen Montageelemente (20) einen Montagerahmen (10) bilden, um eine feldartige Anordnung der Solarpaneele (S) darauf zu unterstützen, wobei sich jedes Solarpaneel (S) zwischen wenigstens zwei lateral beabstandeten Montageelementen (20) erstreckt.

## Revendications

1. Système de montage (100) pour monter un ou plusieurs panneaux solaires (S), comprenant :
une pluralité d'éléments de montage allongés (20) adaptés pour être agencés et fixés en alignement longitudinal les uns avec les autres pour supporter un ou plusieurs panneaux solaires (S) sur ces derniers ; et
une pluralité de dispositifs d'ancrage (30) pour fixer chacun des éléments de montage (20) sur une structure de support,
dans lequel chacun des éléments de montage (20) comprend :
une partie supérieure (21) adaptée pour recevoir et supporter une région de bord (E) d'un panneau solaire (S), et
une partie de base (22) configurée pour le raccordement avec un ou plusieurs des dispositifs d'ancrage (30) sensiblement le long de toute la longueur de l'élément de montage (20),
**caractérisé en ce que** la partie de base (22) est longitudinalement décalée de et/ou s'étend longitudinalement au-delà de la partie supérieure (21), de sorte que la partie de base (22) de l'élément de montage (20) est configurée pour chevaucher avec la partie de base (22) d'un élément de montage (20) longitudinalement adjacent ou attenant.

2. Système de montage (100) selon la revendication 1, dans lequel la partie de base (22) comprend au moins un canal (28) s'étendant longitudinalement, qui est ouvert vers le haut pour capturer et/ou diriger l'entrée d'eau sous les panneaux solaires (S), dans lequel ledit au moins un canal (28) ouvert vers le haut de la partie de base (22) est adapté pour chevaucher dans la direction longitudinale avec un canal (28) ouvert vers le haut respectif dans la partie de base (22) d'un élément de montage (20) longitudinalement adjacent ou attenant.

3. Système de montage (100) selon la revendication 1 ou la revendication 2, dans lequel une zone d'installation de panneau (19) sur chaque élément de montage (20) pour recevoir et fixer la région de bord (E) du panneau solaire (S) s'étend longitudinalement par rapport à l'élément de montage (20), et dans lequel le au moins un canal (28) ouvert vers le haut fait saillie latéralement vers un côté de l'élément de montage (20) respectif au-delà d'une étendue latérale de la zone d'installation de panneau (19) sur cet élément de montage (20).

4. Système de montage (100) selon l'une quelconque des revendications 1 à 3, dans lequel la partie de base (22) comprend un canal (23) qui s'ouvre vers le bas et s'étend longitudinalement par rapport à l'élément de montage (20) pour recevoir un élément de couplage (35) de l'un des dispositifs d'ancrage (30).

5. Système de montage (100) selon l'une quelconque des revendications 1 à 4, dans lequel la pluralité d'éléments de montage allongés (20) sont également adaptés pour être agencés et fixés de manière sensiblement parallèle à et latéralement espacés les uns des autres, de sorte que les éléments de montage (20) allongés forment un châssis de montage (10) pour supporter une rangée de panneaux solaires (S) sur ces derniers, dont chaque panneau solaire (S) s'étend entre au moins deux éléments de montage (20) espacés latéralement.
